(19) Europäisches Patentamt
European Patent Office
Office européen des brevets

(11) **EP 3 152 461 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **15749966.6**

(22) Anmeldetag: **05.06.2015**

(51) Internationale Patentklassifikation (IPC):
***F16H 1/28*** *(2006.01)*

(52) Gemeinsame Patentklassifikation (CPC):
**F16H 1/28**

(86) Internationale Anmeldenummer:
**PCT/DE2015/000274**

(87) Internationale Veröffentlichungsnummer:
**WO 2015/185029 (10.12.2015 Gazette 2015/49)**

(54) **UMLAUFGETRIEBE MIT ZWEI SONNENRÄDERN**

PLANETARY GEARBOX WITH TWO SUN WHEELS

ENGRENAGE PLANÉTAIRE DÉMULTIPLIÉ À DEUX ROUES SOLAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2014 DE 102014008142**

(43) Veröffentlichungstag der Anmeldung:
**12.04.2017 Patentblatt 2017/15**

(73) Patentinhaber:
• **Zimmer, Günther**
**77866 Rheinau (DE)**
• **Zimmer, Martin**
**77866 Rheinau (DE)**

(72) Erfinder:
• **Zimmer, Günther**
**77866 Rheinau (DE)**
• **Zimmer, Martin**
**77866 Rheinau (DE)**

(74) Vertreter: **Thämer, Wolfgang**
**Zürn & Thämer**
**Patentanwälte**
**Adalbert-Stifter-Straße 12**
**76275 Ettlingen (DE)**

(56) Entgegenhaltungen:
**EP-A2- 0 612 934      JP-A- 2001 263 436**
**US-A- 3 596 538      US-A- 3 889 554**
**US-A- 4 850 247      US-B2- 6 705 970**

**Beschreibung**

Die Erfindung betrifft einen ringförmiger Antrieb mit einem in einem Gehäuse integrierten, ins Langsame übersetzenden Umlaufgetriebe, wobei ein im Gehäuse gelagerter Antriebsmotor auf einen mindestens zwei Planeten lagernden Umlaufsteg wirkt, dessen einzelne Planeten zum einen an einem im Gehäuse drehfest angeordneten ersten außenverzahnten Sonnenrad und zum anderen an einem abtreibenden zweiten außenverzahnten Sonnenrad abrollen, wobei das Subtrahieren der Zähnezahl des abtreibenden zweiten Sonnenrades von der Zähnezahl des drehfest angeordneten ersten Sonnenrades eine geradzahlige natürliche Zahl als Differenzzähnezahl $z_{Diff}$ ergibt, wobei alle Planeten die gleiche Zähnezahl aufweisen, wobei mindestens ein Sonnenrad eine positive oder eine negative Profilverschiebung aufweist, wobei alternativ zum vorgenannten Merkmal mindestens ein Sonnenrad eine positive oder eine negative Profilverschiebung aufweist und der einzelne Planet für das jeweilige Kämmen mit dem einzelnen Sonnenrad eine separate Verzahnung hat und beide Verzahnungen - bei gleicher Zähnezahl - mindestens eine Verzahnung haben, die eine positive oder eine negative Profilverschiebung aufweist.

Es besteht ein Bedarf an Antrieben, bei denen in einem gemeinsamen Gehäuse ein Antriebsmotor und ein Stirnrädergetriebe mittlerer Übersetzung untergebracht sind. Als mittlere Übersetzungen ins Langsame werden hier Übersetzungen bezeichnet, bei denen auf eine Abtriebswellendrehung 20 bis 150 Antriebsumdrehungen des Motors erforderlich sind.

Aus der DE 39 41 719 A1 ist ein Planetengetriebe für sehr große Übersetzungen ins Langsame bekannt, bei dem um ein antreibendes Sonnenrad mehrere auf einem Steg gelagerte Planeten umlaufen. Die Planeten sind so breit, dass sie mit zwei koaxial nebeneinander angeordneten, innenverzahnten Hohlrädern zugleich kämmen. Eines der Hohlräder ist drehstarr im Getriebegehäuse gelagert, während das andere Hohlrad als Abtriebsrad dient. Beide Hohlräder haben bei unterschiedlichen Zähnezahlen den gleichen Modul und mindestens ein Hohlrad weist eine Profilverschiebung auf.

In dem Aufsatz "Anordnung mehrerer Umlaufräder bei Planetengetrieben" von MEIER, Bruno, der Zeitschrift "Konstruktion", Ausgabe 13, Heft 12, Seiten 67-69 von 1961, ist u.a. ein Umlaufgetriebe beschrieben, dessen Steg pro Stegachse ein Umlaufrad lagert, das zugleich mit zwei Sonnenrädern unterschiedlicher Zähnezahl kämmt. Die Zähnezahlen der Sonnenräder unterscheiden sich um 0, 2, 4, 6 ... Zähne.

Aus der DE 40 26 886 A1 ist ein unechtes Planetengetriebe bekannt, bei dem anstelle der beiden Sonnenräder des zuvor genannten Standes der Technik zwei Hohlräder verwendet werden.

Die US 6 705 970 B2 beschreibt u.a. ein Differentialumlaufgetriebe, bei dem ein elektromotorisch angetriebener Steg über seine Umlaufräder jeweils mit zwei Sonnenrädern kämmt, wobei ein Sonnenrad als Abtrieb wirkt, während das andere Sonnenrad am Getriebegehäuse abgestützt ist. Der Motor, der Steg und die Sonnenräder sind räumlich hintereinander angeordnet.

Aus der US 1 777 490 A und EP 612 934 A2 sind jeweils zwei Sonnenräder umfassende Umlaufgetriebe der zuvor genannten Art bekannt, deren Stege jeweils über ein zusätzliches Stirnradgetriebe angetrieben werden. Die Antriebsmotoren sitzen exzentrisch zum jeweiligen Steg außerhalb der Umlaufgetriebe.

Der vorliegenden Erfindung liegt die Problemstellung zugrunde, einen Antrieb zu entwickeln, der bei geringem Bauraumbedarf ohne die Verwendung eines Schnecken- oder Schraubradgetriebes eine Übersetzung ins Langsame ermöglicht.

Diese Problemstellung wird mit den Merkmalen des Anspruchs 1 gelöst. Die Gesamtzahl $p_{ges}$ der Planeten ist größer als die Differenzzähnezahl $z_{Diff}$. Bei einer Teilanzahl $p_v$ der Gesamtzahl $p_{ges}$ der Planeten mit $p_v = p_{ges} - z_{Diff}$ sind die jeweiligen separaten Verzahnungen pro Planet in Umlaufrichtung - hinter jedem Planet ohne Verzahnungsverschwenkung - hintereinander jeweils - gegenüber dem vorderen - um einen Versatzwinkel $\delta$ verschwenkt. Der Versatzwinkel $\delta$ ergibt sich aus der Formel $\delta = \tau * (z_{Diff}/p_{ges}) * (z_{s1}/z_{pl})$ , mit $\tau$ als Teilungswinkel des ersten Sonnenrades, $z_{S1}$ als Zähnezahl des ersten Sonnenrades und $z_{Pl}$ als Zähnezahl der Planeten.

Das Subtrahieren der Zähnezahl des abtreibenden zweiten Sonnenrades von der Zähnezahl des drehfest angeordneten ersten Sonnenrades ergibt eine einstellige, geradzahlige und natürliche Zahl als Differenz-Zähnezahl. Das abtreibenden zweite Sonnenrad ist Teil einer Hohlwelle, die in dem sie radial umgebenden Gehäuse gelagert und geführt ist.

Der Antriebsmotor ist ein Torquemotor, dessen Rotor eine Hohlwelle ist. Der Rotor ist auf der Nabe des Umlaufstegs angeordnet.

Mit der vorliegenden Erfindung wird ein Antrieb mit einem integrierten hohlradfreiem Umlaufgetriebe geschaffen, der bei kleinem Bauraum eine große Übersetzung aufweist und zudem über eine Leistungsverzweigung verfügt.

Weitere Einzelheiten der Erfindung ergeben sich aus den Unteransprüchen und der nachfolgenden Beschreibung schematisch dargestellter Ausführungsformen.

Figur 1:      Perspektivische Ansicht eines Antriebes mit einer Hohlwelle;

Figur 2:      Perspektivische Unteransicht des Antriebes aus Figur 1, jedoch mit abgenommenem Gehäuseteil;

Figur 3:      halber Querschnitt eines mit Figur 1 vergleichbaren Antriebs;

Figur 4:      Perspektivische Getriebeschemaansicht des im Antrieb nach Figur 1 verwendeten Umlaufgetriebes;

Figur 5:      wie Figur 4; jedoch mit der doppelten Leistungsverzweigung;

Figur 6: Teilquerschnitt eines weiteren Antriebes mit einer Hohlwelle, jedoch ohne Sonnenträger;

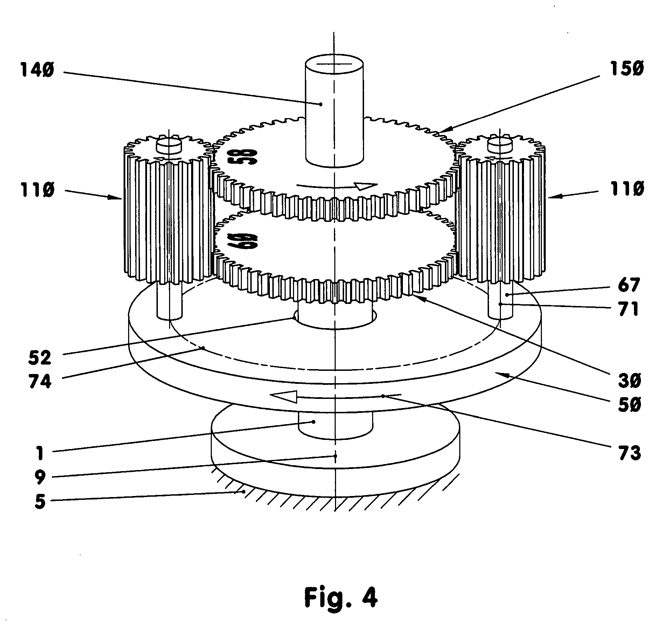

Die Figur 4 zeigt vereinfacht das Schema eines Umlaufgetriebes mit großer Untersetzung bzw. großer Übersetzung ins Langsame. Ein erstes, ortsfestes Sonnenrad (30) ist über eine Achse (1) starr am Untergrund (5) befestigt. Zwischen dem ortsfesten Sonnenrad (30) und dem Untergrund (5) ist ein Umlaufsteg (50) in Form einer Scheibe angeordnet. Über seine zentrale Bohrung (52) ist die Scheibe auf der Achse (1) drehbar gelagert. Der anzutreibende Umlaufsteg (50) trägt zwei zur Mittellinie (9) der Achse (1) parallele Lagerbolzen (67). Die Mittellinien (71) der Lagerbolzen (67) liegen zusammen mit der Getriebemittellinie (9) in einer Ebene.

Auf jedem Lagerbolzen (67) ist drehbar ein Planet (110) gelagert. Jeder Planet (110) kämmt mit dem ersten Sonnenrad (30). Bei einem Getriebe mit langsam umlaufendem Umlaufsteg (50) kann auch nur ein Planet (110) auf dem Umlaufsteg (50) angeordnet sein.

Oberhalb des ersten Sonnenrades (30) ist ein zweites Sonnenrad (150) angeordnet, dessen Mittellinie deckungsgleich zur Mittellinie des ersten Sonnenrades (30) verläuft. Das Sonnen-rad (150) wirkt auf eine Abtriebswelle (140). Das zweite Sonnenrad (150) hat hier zwei Zähne weniger als das erste Sonnenrad (30). Auch das zweite Sonnenrad (150) kämmt mit den Planeten (110). Um trotz unterschiedlicher Zähnezahlen der Sonnenräder (30, 150) ein einwandfreies Kämmen mit den Planeten (110) zu realisieren, gibt es mehrere Möglichkeiten. Erstens kann das erste Sonnenrad (30) ein V-Minus-Rad sein, während das zweite Sonnenrad (150) ein V-Null-Rad ist. Zweitens kann das ortsfeste Sonnenrad (30) ein V-Null-Rad und das abtreibende Sonnenrad (150) ein V-Minus-Rad sein. Drittens können beide Sonnenräder (30, 150) eine Profilverschiebung haben, wobei dann das erste Sonnenrad (30) eine negative und das zweite Sonnenrad (150) eine positive Profilverschiebung aufweist.

Die Übersetzung des Umlaufgetriebes, also das Drehzahlverhältnis zwischen dem angetriebenen Umlaufsteg (50) und der abtreibenden Abtriebswelle (140), errechnet sich aus einem Quotienten, dessen Dividend die Zähnezahl des zweiten, abtreibenden Sonnenrades ist, während dessen Divisor die Differenz aus der Zähnezahl des ersten, ortsfesten Sonnenrades (30) und des zweiten Sonnenrades (150) ist. Da hier das zweite, abtreibende Sonnenrad (150) 58 Zähne hat, während das erste 60 Zähne aufweist, ist i = 58/(60-58). Die Zähnezahl der Planeten (110) ist von untergeordneter Bedeutung. Sie sollte größer sein als die sogenannte Grenzzähnezahl nach DIN 3960.

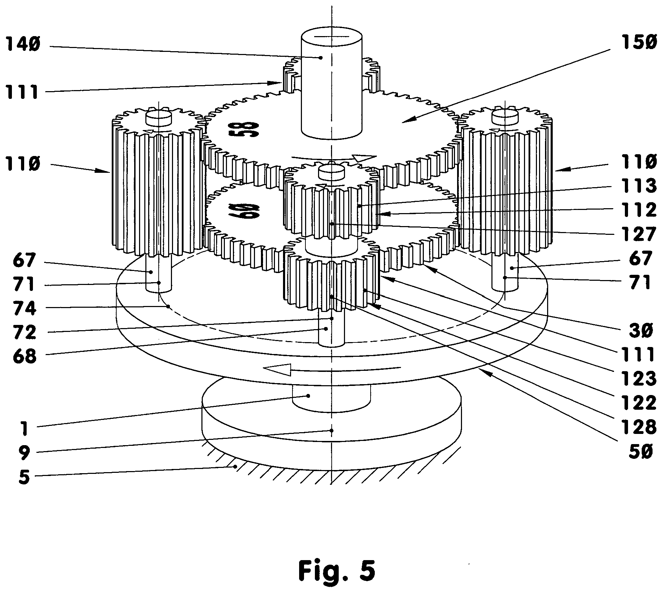

Die Figur 5 zeigt ein Getriebe, bei dem die übertragbare Leistung gegenüber dem Getriebe aus Figur 4 durch eine Leistungsverzweigung verdoppelt wird. Dazu trägt der Umlaufsteg (50) zusätzlich zwei auf weiteren Lagerbolzen (68) gelagerte Planeten (111). Auch diese Planeten (111) haben Mittellinien (72), die zum einen parallel zur Hauptmittellinie (9) des Getriebes und zum anderen mit dieser (9) in einer Ebene liegen. Zudem schneidet sich diese Ebene senkrecht mit derjenigen Ebene, die durch die beiden Mittellinien (71) der Planeten (110) gebildet wird, wobei die Schnittgerade der beiden Ebenen die Hauptmittellinie (9) ist.

Um ein Kämmen mit beiden außenverzahnten Sonnenrädern (30, 150) zu ermöglichen, sind die neu hinzugekommenen Planeten (111) in zwei Teilplanete (112, 122) aufgeteilt, wobei jeder Teilplanet (112, 122) mit einer eigenen zur Verzahnung des anderen u.a. auch versetzten Verzahnung (113, 123) ausgestattet ist. Bei identischem Modul und gleicher Zähnezahl sind die Verzahnungen (113, 123) im Ausführungsbeispiel um den halben Teilungswinkel $\tau$ gegeneinander verschwenkt verzahnt.

Wie am vorderen Planet (111) deutlich erkennbar ist, sitzt über jeder Zahnlücke (128) der unteren Verzahnung (123) ein Zahn (127) der oberen Verzahnung (113). Alternativ können die neu hinzugekommenen Planeten (111) z.B. im Wesentlichen zweiteilig - nach Figur 5 - als oberer (112) und unterer Teilplanet (122) gefertigt sein, wobei beide Teilplaneten (112, 122) - um den halben Teilungswinkel versetzt - starr miteinander verbunden, z.B. verschraubt sind.

Der Versatzwinkel $\delta$ zwischen den beiden versetzten Verzahnungen (113, 123) pro Teilplanet (112, 122) errechnet sich aus

$$\delta = k * \tau * (z_{S1}/z_{P1}),$$

wobei $\tau$ der Teilungswinkel des ersten Sonnenrades (30) nach DIN 3960 ist, $z_{S1}$ die Zähnezahl des ersten Sonnenrades (30), $z_{P1}$ die Zähnezahl der Teilplaneten (112, 122) bezeichnet und

$$k = z_{Diff}/p$$

beträgt. $z_{Diff}$ ist die Differenz aus der Zähnezahl des ersten, ortsfesten Sonnenrads (30) und des zweiten, abtreibenden Sonnenrads (150). p ist die Anzahl der Planeten (110, 111).

Hat nach Figur 5 das erste Sonnenrad (30) z.B. 60 Zähne und das zweite (150) 58 Zähne und die Planeten (110, 111) 20 Zähne, so ist k = 1/2, $(z_{S1}/z_{P1})$ = 3 und $\delta$ = 9°.

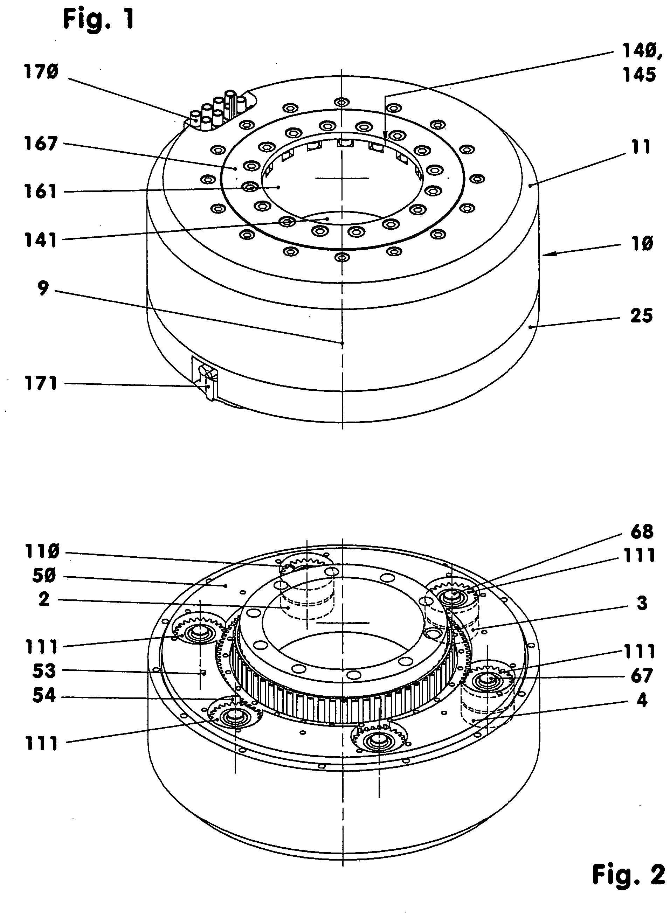

Die Figuren 1 bis 3 zeigen eine Ausführungsform eines ringförmigen Antriebs, die das in Figur 5 dargestellte Getriebeschema zusammen mit einem Elektromotor (40) in einem Gehäuse (10) unterbringt. Als Abtrieb dient eine z.B. mehrteilige Hohlwelle (140), die in dem sie radial umgebenden ebenfalls z.B. mehrteiligen ortsfest montierbaren Gehäuse (10) gelagert und geführt ist.

Das Gehäuse (10) besteht aus einem Statorträger (11) und einem Sonnenträger (25), vgl. auch Figur 1. Beide miteinander verschraubten Gehäuseteile (11, 25) haben z.B. bei einen gemeinsamen Durchmesser von 190 mm und eine Länge von 85 mm. Die Hohlwelle (140) überragt die Breite des Gehäuses (10) z.B. um einige Zehntel Millimeter. Die Hohlwelle (140) hat eine zentrale Bohrung (145), deren Durchmesser mindestens 40% des maximalen Gehäusedurchmessers misst. Hier beträgt der Durchmesser z.B. 78 mm.

Der Statorträger (11) hat die Form eines Topfes, der im Boden eine zentrale Stufenbohrung (15) aufweist. In der Stufenbohrung (15) ist als Kombilager des Antriebs z.B. der Außenring (22) eines Kreuzrollenlagers (21) angeordnet. Der Außenring (22) ist axial fixiert zwischen einem einen Gehäusering (14) begrenzenden planen Gehäusebund (16) der Stufenbohrung (15) und einem Klemmring (17). Der im Gehäuse (10) angeordnete Klemmring (17) ist mit dem Statorträger (11) verschraubt.

Zwischen dem das lagerspielfreie Kombilager (21) radial stützenden Gehäusering (14), an dem der Klemmring (17) axial anliegt, und dem Außenbereich (12) des Statorträgers (11) ist der ringförmige Stator (41) des Motors (40) angeordnet. Die Blechpakete (43) des Stators (41) ragen zur Hauptmittellinie (9) hin. Der Statorträger (11) hat im Bereich der Statorlagerung beispielsweise radiale Kühlrippen (13).

Am Statorträger (11) ist der Sonnenträger (25) entlang einer umlaufenden, zentrierenden Montagefuge angeschraubt. Auch der Sonnenträger (25) hat die Form eines Topfes mit zentraler Bohrung (26). Zur Verlängerung der Bohrung (26) befindet sich am Sonnenträger (25) ein z.B. angeformter Lagerstützring (27). An der inneren Stirnseite des Lagerstützrings (27) ist ein ortsfestes außenverzahntes Sonnenrad (30) durch Verschrauben mittels der Schrauben (32) angeordnet. Die zwischen dem Lagerstützring (27) und dem Sonnenrad (30) gelegene Montagefuge weist eine Zentrierung auf.

Zwischen dem Boden (29) des Sonnenträgers (25), dem Kombilager (21) des Statorträgers (11) und der Hohlwelle (140) befindet sich ein zusammenhängender Hohlraum (7). In Letzterem ist ein auf der Hohlwelle (140) gelagerter Umlaufsteg (50) angeordnet.

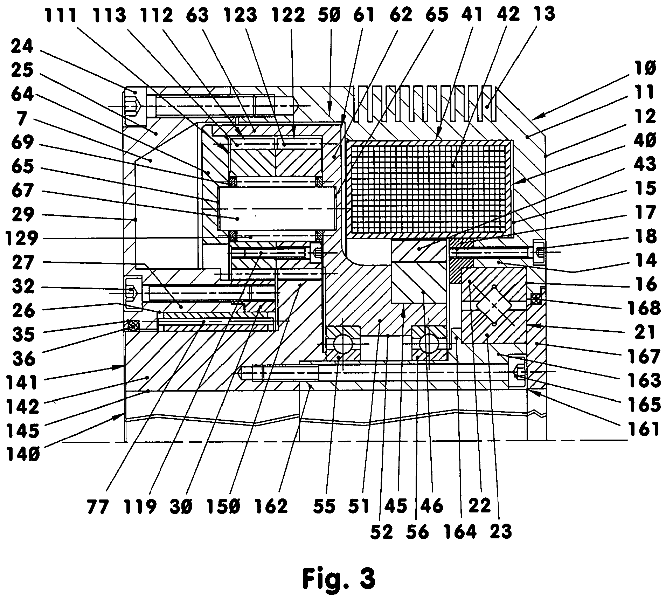

Der Umlaufsteg (50) besteht im Ausführungsbeispiel nach Figur 3 aus einer Nabe (51), einem Nabenflansch (61) und einem Deckel (64). Die Nabe (51) hat eine gestufte Bohrung (52) mit zwei von den Nabenstirnseiten aus eingearbeiteten Einsenkungen. In jeder Einsenkung sitzt als Wälzlager ein Rillenkugellager (55, 56), ein Schrägkugellager, ein Kegelrollenlager oder dergleichen. Werden vorspannbare Wälzlager verwendet, lagern sie die Nabe (51) in O-Anordnung auf der Hohlwelle (140).

Auf der Nabe (51) sitzt im Bereich des rechten Wälzlagers (56) der Rotor (45) des Motors (40). Er ist in einer einseitig offenen Nut der Nabe (41) verschraubt. Der Rotor (45) hat einen Permanentmagnetring (46), der gegenüber dem statoreigenen Blechpaket (43) angeordnet ist.

An die Nabe (51) schließt sich linksseitig der Nabenflansch (61) an, vgl. Figur 3. Letzterer besteht aus dem Nabenteller (62) und dem Nabenaußenring (63). An der Stirnfläche des Nabenaußenrings (63) ist zentriert der Deckel (64) befestigt. Der Nabenflansch (61) und der Deckel (64) bilden einen mehrere Planeten (110, 111), vgl. Figur 2, lagernden Käfig, wobei hier die Planeten (110, 111) in den Planetenaussparungen (54) angeordnet sind, vgl. Figur 1.

Ggf. wird auf dem Deckel (64) der bewegliche Teil eines Winkelmesssystems oder eines Tachogenerators angeordnet. Das ortsfeste Teil des oder der Messsysteme ist dann z.B. am Sonnenträger (25) gelagert, vgl. Figur 1.

Die einzelnen, z.B. zweiteiligen jeweils aus den Teilplaneten (112, 122) bestehenden Planeten (110, 111) sitzen nadelgelagert auf z.B. zylindrischen Lagerbolzen (67, 68), die beidseits in entsprechenden Sacklochbohrungen (65) des Nabentellers (62) und des Deckels (64) aufgenommen sind. Die Lagerbolzen (67) sind in die Sacklochbohrungen (65) eingepresst oder in sonstiger Weise gegen ein Rotieren um ihre eigene Mittellinie (71, 72) gesichert. Ggf. werden die Sacklochbohrungen (65) zur Erhöhung der Fertigungsgenauigkeit durch Durchgangsbohrungen ersetzt, in denen dann zur axialen Positionierung der Lagerbolzen (67) jeweils außen entsprechende Deckel oder Sicherungsringe angeordnet werden.

Die Teilplaneten (112, 122) jeweils eines Planeten (111) sind hier z.B. über Senkschrauben (119) oder Passschrauben starr miteinander verschraubt. Der nach Figur 3 linke Teilplanet (112) kämmt mit dem ortsfesten Sonnenrad (30). Beide Teilplaneten (112, 122) sind wie auch die außenverzahnten Sonnenräder (30, 150) im Ausführungsbeispiel geradverzahnte Stirnräder. Die Teilplaneten (112, 122) sitzen mit axialem Spiel auf den Lagerbolzen (67). Ihre jeweils äußeren Stirnseiten verfügen über je einen schmalen Anlaufsteg, über den sie reibungsarm am Deckel (64) oder am Nabenteller (62) ggf. anliegen.

Die z.B. zweiteilige Hohlwelle (140) umfasst eine Sonnenwelle (141) und eine Stützstegwelle (161). Die Sonnenwelle (141) besteht aus einer Rohrwelle (142) und dem daran angeordneten abtriebsseitigen Sonnenrad (150). Letzteres kämmt mit dem rechten Teilplaneten (122).

Radial zwischen der außen feinbearbeiteten Rohrwelle (142) und dem nadellagerseitig ebenfalls feinbearbeiteten Lagerstützring (27) des Sonnenträgers (25) ist ein Nadellager (77) mit z.B. minimaler Lagerluft angeordnet. Das Nadellager (77) bildet die als Loslager wirkende Radiallagerung der Hohlwelle (140) im Gehäuse (10).

Die Stützstegwelle (161) sitzt, gehalten durch mehrere Schrauben (165), zentriert an der Sonnenwelle (141). Ihre radiale äußere Gestalt hat einen an die Sonnenwelle (141) anschließenden ersten zylindrischen und feinbearbeiteten Abschnitt (162), auf dem die den Umlaufsteg (50) z.B. schwimmend lagernden Wälzlager (55, 56) angeordnet sind. Ein zweiter zylindrischer feinbearbeiteter Abschnitt (163) ist am freien Ende der Stützstegwelle (161) angeordnet. Auf diesem Abschnitt (163) ist der Innenring (23) des Kombilagers (21) gelagert. Zwischen den Abschnitten (162) und (163) befindet sich ein flanschartiger

Anschlagsteg (164), an dem sich rechtsseitig der Innenring (23) des Kombilagers (21) abstützt.

An der äußeren Stirnseite der Stützstegwelle (161) ist eine Anschlagscheibe (167), z.B. mittels Passschrauben, fest verschraubt und zentriert angeordnet. Die Anschlagscheibe (167) fixiert den Innenring (23) des Kombilagers (21) in axialer Richtung. Zum anderen trägt sie auf ihrer radialen Außenwandung einen O-Ring (168) zum Abdichten des Hohlraums (7) gegenüber der Umgebung. Der O-Ring (168) gleitet entlang des äußeren Bereichs der Stufenbohrung (15) des Statorträgers (11). Zwischen dem Statorträger (11) und der Anschlagscheibe (167) ist er in einer labyrinthartigen Fuge angeordnet.

Auf der anderen Seite des Antriebs ist zur Abdichtung des Hohlraums (7) gegenüber der Umgebung ebenfalls ein O-Ring (36) positioniert. Er liegt in einer Ringnut (35) des Sonnenträgers (25), die der zylindrischen Außenfläche der Rohrwelle (142) gegenüberliegt.

Anstelle der O-Ringe (35, 168) können auch Quadringe oder Doppellippendichtungen verwendet werden. Sollte der Antrieb in einer staubigen oder spritzwasserhaltigen Umgebung eingesetzt werden, so kann das Gehäuse (10) auch einen Sperrluftanschluss erhalten, über den dann der Hohlraum (7) unter einen Überdruck von z.B. 0,2 bis 0,6*10$^5$ Pa gesetzt wird. Zusätzlich kann der Sperrluftanschluss auch dazu benutzt werden, die Abwärme des Motors z.B. über Ventile, die an geeigneter Stelle angeordnet sind, abzuführen. Der Hohlraum (7) kann auch anstelle von Sperrluft von einem technischen Öl durchströmt werden, das neben der Schmierung des Getriebes auch das Abführen der Motorabwärme übernimmt.

Die Wälzlager (21, 55) verfügen über eine Lebensdauerschmierung, während die Zahnräder (110, 111, 30, 150) im Ausführungsbeispiel mit einem Getriebefett geschmiert sind. Diese gilt auch für die Nadellager (77, 129). Ggf. ist zwischen der zentralen Bohrung des Deckels (64) und dem Lagerstützring (27) eine schleifende Dichtung oder eine Labyrinthdichtung angeordnet.

Bei einem Bestromen der ortsfesten Statorwicklung (42) dreht sich der Umlaufsteg (50) über die Wälzlager (55, 56) um die Hohlwelle (140). Der rotierende Umlaufsteg (50) rollt die Teilplaneten (112, 122) auf dem ortsfesten, ersten Sonnenrad (30) ab. Dabei treiben die Teilplaneten (112, 122) das zweite Sonnenrad (150) an, das wiederum die Hohlwelle (140) rotieren lässt.

Hat das erste Sonnenrad (30) z.B. 121 Zähne und das zweite Sonnenrad (150) zwei Zähne weniger, beträgt die Getriebeuntersetzung 1:59,5. Dreht sich beispielsweise in Figur 2 der Umlaufsteg (50) im Uhrzeigerdrehsinn und hat der untere Teilplanet (2) des Planeten (110) keinen Versatzwinkel, so hat der untere Teilplanet (3) des nächsten Planeten (111) einen Versatz von δ = 1/3, während der untere Teilplanet (4) des wiederum nächsten Planeten (111) einen Versatz von δ = 2/3 aufweist.

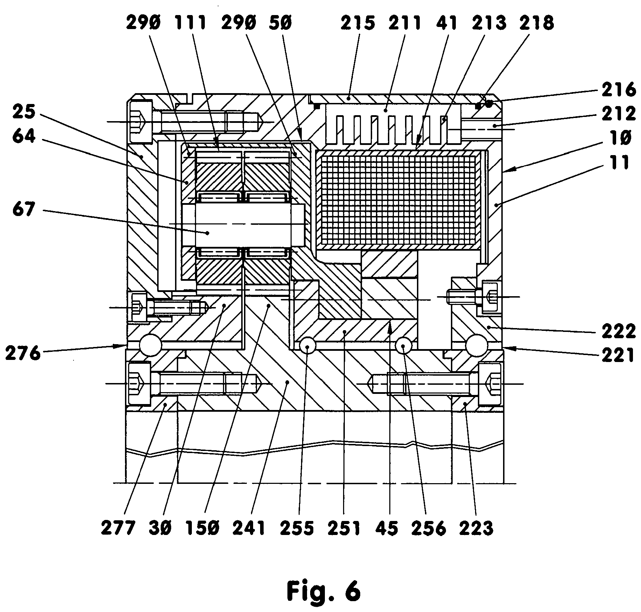

In Figur 6 ist eine kompakt bauende Variante des Antriebs der Figuren 1 bis 3 dargestellt. Durch den Einbau von Sonderwälzlagern (221; 276; 241, 251) verringert sich die Breite des Antriebs um 18,3 mm. Dazu werden die Sonnenwelle (141) und die Stützstegwelle (161) in einer Kombiwelle (241) zusammengeführt. In die Kombiwelle (241) ist zum einen das Sonnenrad (150) integriert und zum anderen bildet sie den Innenring der bisherigen Wälzlager (55, 56). Die Nabe (51) des Umlaufstegs (50) ist hier auf einem flanschartigen Außenring (251) befestigt, der über die Wälzkörper (255, 256) auf der Kombiwelle (241) gelagert ist. Auf dem Außenring (251) sitzt ferner der Rotor (45), wobei der Rotor (45) und der Umlaufsteg (50) beispielsweise mit dem Außenring (251) verschraubt sind.

Beidseits der Kombiwelle (241) sind die Sonderlager (221, 276) angeordnet. Dazu ist jeweils der Innenring (223) und (277) der Sonderlager mit der Kombiwelle (241) verschraubt. Die Innenringe (223, 277) liegen zentriert an den jeweiligen Stirnflächen der Kombiwelle (241) an. Der rechte Innenring (223) lagert z.B. über Wälzlagerkugeln den flanschartigen Außenring (222), an dem der Statorträger (11) angeflanscht ist. Auf dem linken Innenring (277) stützt sich, z.B. ebenfalls über Wälzlagerkugeln, das mit dem Sonnenträger (25) verschraubte Sonnenrad (30) ab. Das bisherige Kombilager (21) und das bisherige Nadellager (77) werden somit durch die Sonderlager (221) und (276) ersetzt.

Diese Antriebsvariante verfügt nach Figur 6 beispielsweise über eine separate Flüssigkeitskühlung zur Abfuhr der Motorabwärme. Dazu ist in der Außenwandung des Statorträgers (11) eine umlaufende Ausnehmung (211) eingearbeitet. In der Ausnehmung (211) sind mehrere umlaufende, radial abstehende Kühlrippen (213) angeordnet. Die Ausnehmung (221) ist mit einem Rohrdeckel (215) verschlossen, der in axialer Richtung auf den Statorträger (11) aufschiebbar ist. zur axialen Sicherung weist der Statorträger (11) gemäß Figur 6 in der Nähe der rechten Stirnseite des Antriebs eine umlaufende Nut auf, in der ein Sicherungsring (216) neben dem rechten Stirnrand des Rohrdeckels (215) form- und kraftschlüssig sitzt. In der Montagefuge zwischen dem Rohrdeckel (215) und dem Statorgehäuse (11) sind zwei Dichtringe (218) angeordnet.

In der rechten Stirnseite des Antriebs befindet sich je ein Zu- und ein Ablauf (212) für das Kühlmittel.

Soll das Kühlmittel, z.B. Kühlwasser, kanalisiert im Statorträger (11) geführt werden, können die Kühlrippen (213) durch eine sich in der Ausnehmung (221) schraubenförmig windende Kühlrippe ersetzt werden. In diesem Fall reichen die einzelnen Windungen der Kühlrippe an den Rohrdeckel (215) heran, so dass sie dort mit oder ohne Spiel anliegen. Der hier nicht dargestellte Kühlmittelablauf befindet sich beispielsweise in der Stirnseite des Sonnenträgers (25). Der Ablaufanschluss ist dabei über eine den Statorträger (11) durchquerende Bohrung mit der Ausnehmung (211) verbunden.

Bezugszeichenliste:

| | |
|---|---|
| 1 | Achse |
| 2, 3, 4 | Teilplaneten von (110, 111) |
| 5 | Untergrund |
| 7 | Hohlraum |
| 9 | Getriebemittellinie, Hauptmittellinie |
| | |
| 10 | Gehäuse |
| 11 | Statorträger, Gehäuseteil |
| 12 | Außenbereich |
| 13 | Kühlrippen |
| 14 | Gehäusering |
| 15 | Stufenbohrung |
| 16 | Gehäusebund |
| 17 | Klemmring |
| 18 | Schrauben für (17) |
| | |
| 21 | Kreuzrollenlager, Kombilager |
| 22 | Außenring |
| 23 | Innenring |
| 24 | Schraube für (11, 25) |
| 25 | Sonnenträger, Gehäuseteil |
| 26 | Bohrung, zentral |
| 27 | Lagerstützring |
| 29 | Boden |
| 30 | Sonnenrad, erstes; ortsfest, feststehend |
| 32 | Schraube für (25, 30) |
| 35 | Ringnut |
| 36 | O-Ring |
| | |
| 40 | Motor, Torquemotor, Elektromotor |
| 41 | Stator |
| 42 | Wicklung, Statorwicklung |
| 43 | Blechpaket |
| 45 | Rotor |
| 46 | Permanentmagnetring |
| | |
| 50 | Umlaufsteg |
| 51 | Nabe |
| 52 | Stufenbohrung, zentrale Bohrung |
| 53 | Gewindebohrung für Verschraubung von (64) |
| 54 | Planetenaussparungen |
| 55, 56 | Wälzlager, Rillenkugellager |
| | |
| 61 | Nabenflansch |
| 62 | Nabenteller |
| 63 | Nabenaußenring |
| 64 | Deckel |
| 65 | Sacklochbohrungen |
| 67, 68 | Lagerbolzen |
| 69 | Anlaufscheiben |

| | |
|---|---|
| 71, 72 | Mittellinien zu (67, 68; 110, 111) (Rotationsachsen) |
| 73 | Pfeil für eine Drehrichtung von (50) |
| 74 | Kreis, auf dem (71, 72) liegen |
| 77 | Nadeln, Nadellager |
| | |
| 110, 111 | Planete |
| 112 | linker oder oberer Teilplanet |
| 113 | Verzahnung des oberen Teilplaneten, ggf. kegelig |
| 119 | Senkschraube |
| | |
| 122 | rechter oder unterer Teilplanet |
| 123 | Verzahnung des unteren Teilplanets, ggf. kegelig |
| 127 | Zahn |
| 128 | Zahnlücke |
| 129 | Nadeln der Nadellagerungen von (110, 111) |
| | |
| 140 | Hohlwelle, Abtriebswelle |
| 141 | Sonnenwelle |
| 142 | Rohrwelle |
| 145 | Bohrung, zentral; Durchgangsbohrung |
| | |
| 150 | Sonnenrad, zweites; Abtriebsrad, Abtrieb |
| | |
| 161 | Stützstegwelle |
| 162 | erster Abschnitt |
| 163 | zweiter Abschnitt |
| 164 | Anschlagsteg, flanschartig |
| 165 | Schrauben |
| 167 | Anschlagscheibe |
| 168 | O-Ring |
| | |
| 170 | Anschluss für Motor und Tachogenerator |
| 171 | Anschluss für Wegmesssystem |
| | |
| 211 | Ausnehmung, umlaufend |
| 212 | Kühlmittelzulauf, Kühlmittelablauf |
| 213 | Kühlrippen |
| 215 | Rohrdeckel |
| 216 | Sicherungsring |
| 218 | Dichtringe |
| | |
| 221 | Sonderlager, rechts; Wälzlager |
| 222 | Außenring von (221) |
| 223 | Innenring von (221) |
| | |
| 241 | Kombiwelle |
| 251 | Außenring zu (255, 256) |
| 255, 256 | Wälzkörper |
| 276 | Sonderlager, links; Wälzlager |
| 277 | Innenring von (276) |

**Patentansprüche**

1. Ringförmiger Antrieb mit einem in einem Gehäuse (10) integrierten, ins Langsame übersetzenden Umlaufgetriebe,

- wobei ein im Gehäuse (10) gelagerter Antriebsmotor (40) auf einen mindestens zwei Planeten (110, 111) lagernden Umlaufsteg (50) wirkt, dessen einzelne Planeten (110, 111) zum einen an einem im Gehäuse (10) drehfest angeordneten ersten außenverzahnten Sonnenrad (30) und zum anderen an einem abtreibenden zweiten außenverzahnten Sonnenrad (150) abrollen,
- wobei das Subtrahieren der Zähnezahl des abtreibenden zweiten Sonnenrades (150) von der Zähnezahl des drehfest angeordneten ersten Sonnenrades (30) eine geradzahlige natürliche Zahl als Differenzzähnezahl $z_{Diff}$ ergibt,
- wobei alle Planeten die gleiche Zähnezahl aufweisen,
- wobei mindestens ein Sonnenrad (30, 150) eine positive oder eine negative Profilverschiebung aufweist,
- wobei alternativ zum vorgenannten Merkmal mindestens ein Sonnenrad (30, 150) eine positive oder eine negative Profilverschiebung aufweist und der einzelne Planet (110, 111) für das jeweilige Kämmen mit dem einzelnen Sonnenrad (30, 150) eine separate Verzahnung (113, 123) hat und beide Verzahnungen (113, 123) - bei gleicher Zähnezahl - mindestens eine Verzahnung haben, die eine positive oder eine negative Profilverschiebung aufweist, **dadurch gekennzeichnet,**
- **dass** die Gesamtzahl $p_{ges}$ der Planeten (110, 111) größer als die Differenzzähnezahl $z_{Diff}$ ist,
- **dass** bei einer Teilanzahl $p_v$ der Gesamtzahl $p_{ges}$ der Planeten (110, 111) mit $p_v = p_{ges} - z_{Diff}$ die jeweiligen separaten Verzahnungen pro Planet (111) in Umlaufrichtung - hinter jedem Planet (110) ohne Verzahnungsverschwenkung - hintereinander jeweils - gegenüber dem vorderen - um einen Versatzwinkel $\delta$ verschwenkt sind,
- **dass** sich der Versatzwinkel $\delta$ aus der Formel $\delta = \tau * (z_{Diff}/p_{ges}) * (z_{S1}/z_{Pl})$ ergibt, mit $\tau$ als Teilungswinkel des ersten Sonnenrades (30), $z_{S1}$ als Zähnezahl des ersten Sonnenrades (30) und $z_{Pl}$ als Zähnezahl der Planeten (110, 111).

2. Ringförmiger Antrieb gemäß Anspruch 1, **dadurch gekennzeichnet, dass** eine im Gehäuse (10) gelagerte, das zweite außenverzahnte Sonnenrad (150) tragende Abtriebswelle eine Hohlwelle (140) ist, deren Innendurchmesser der zentralen Bohrung (145) größer als 75% der Hohlwellenlänge ist, wobei die Abtriebswelle wälzgelagert ist.

3. Ringförmiger Antrieb gemäß Anspruch 2, **dadurch gekennzeichnet, dass** der Antriebsmotor (40) ein Torquemotor ist, dessen Rotor (45) eine Hohlwelle ist.

4. Ringförmiger Antrieb gemäß Anspruch 2, **dadurch gekennzeichnet, dass** der Umlaufsteg (50) wälzgelagert auf der Hohlwelle (140) angeordnet ist.

5. Ringförmiger Antrieb gemäß Anspruch 1, **dadurch gekennzeichnet, dass** die Übersetzung des Umlaufgetriebes sich errechnet aus einem Quotienten, dessen Dividend die Zähnezahl des zweiten, abtreibenden Sonnenrades (150) ist, während dessen Divisor die Differenz aus der Zähnezahl des ersten, ortsfesten Sonnenrades (30) und des zweiten, abtreibenden Sonnenrades (150) ist.

6. Ringförmiger Antrieb gemäß Anspruch 1, **dadurch gekennzeichnet, dass** der einzelne Planet (110, 111) aus zwei koaxial angeordneten Teilplaneten (112, 122) besteht, die starr miteinander verbunden sind.

7. Ringförmiger Antrieb gemäß Anspruch 1, **dadurch gekennzeichnet, dass** der Wälzlager (21, 55, 56, 77) aufweist und diese eine Lagerluft der Lagerluftgruppe C2 nach DIN 620/T4 haben.

## Claims

1. Annular drive with an epicyclic gear integrated into a housing (10) and converting to low speed,

- wherein a drive motor (40) mounted in the housing (10) acts on a circulating web (50) bearing at least two planets (110, 111), the individual planets (110, 111) whereof on the one hand roll off on a first externally toothed sun gear (30) arranged rotationally fixed in the housing (10) and on the other hand roll off on a driving second externally toothed sun gear (150),
- wherein the subtraction of the tooth number of the driving second sun gear (150) from the tooth number of the first sun gear (30) arranged rotationally fixed produces an even natural number as a differential tooth number $z_{Diff}$,
- wherein all the planets have the same number of teeth,
- wherein at least one sun gear (30, 150) has a positive or a negative profile shift,
- wherein as an alternative to the aforementioned feature at least one sun gear (30, 150) has a positive or a negative profile shift and the individual planet (110, 111) for the respective comb with the individual sun gear (30, 150) has a separate toothing (113, 123) and both toothings (113, 123) - with the same number of teeth - have at least one toothing, which has a positive or a negative profile shift, **characterised in**

- **that** the total number $p_{ges}$ of the planets (110, 111) is greater than the differential tooth number $z_{Diff}$,

- **that**, in the case of a partial number $p_v$ of the total number $p_{ges}$ of the planets (110, 111) with $p_v = p_{ges} - z_{Diff}$, the respective separate toothings per planet (111) in the direction of rotation - behind each planet (101) without tooth pivoting - in each case behind one another - are pivoted by an offset angle $\delta$ relative to the front one,

- **that** the offset angle $\delta$ results from the formula $\delta = \tau * (z_{Diff}/p_{ges}) * (z_{s1}/z_{p1})$ , with $\tau$ as the pitch angle of the first sun gear (30), $z_{s1}$ as is the tooth number of the first sun gear (30) and $z_{p1}$ as the tooth number of the planets (110, 111).

2. The annular drive according to claim 1, **characterised in that** a drive shaft mounted in the housing (10) and bearing the second externally toothed sun gear (150) is a hollow shaft (140), the inner diameter of the central bore (145) of which is greater than 75% of the hollow shaft length, wherein the drive shaft is mounted on anti-friction bearings.

3. The annular drive according to claim 2, **characterised in that** the drive motor (40) is a torque motor, the rotor (45) of which is a hollow shaft.

4. The annular drive according to claim 2, **characterised in that** the circulating web (50) is arranged on the hollow shaft (140) mounted on anti-friction bearings.

5. The annular drive according to claim 1, **characterised in that** the translation of the epicyclic drive is calculated from a quotient, the dividend of which is the number of teeth of the second driving sun gear (150), whilst the divisor thereof is the difference from the number of teeth of the first, stationary sun gear (30) and the second driving sun gear (150).

6. The annular drive according to claim 1, **characterised in that** the individual planet (110, 111) consists of two coaxially arranged partial planets (112, 122) which are rigidly connected to one another.

7. The annular drive according to claim 1, **characterised in that** it comprises roller bearings (21, 55, 56, 77) and the latter have an internal clearance of internal clearance group C2 according to DIN 620/T4.

**Revendications**

1. Système d'entraînement de forme annulaire avec un train épicycloïdal démultiplié, intégré dans un boîtier (10),

- sachant qu'un moteur d'entraînement (40) logé dans un boîtier (10) agit sur une moulure périphérique (50) logeant au moins deux planétaires (110, 111), dont les planétaires (110, 111) individuels roulent d'une part sur une première roue solaire (30) à denture extérieure disposée solidaire en rotation dans un boîtier (10) et d'autre part sur une deuxième roue solaire (150) à denture extérieure entraînante,

- sachant qu'en soustrayant le nombre de dents de la deuxième roue solaire (150) entraînante du nombre de dents de la première roue solaire (30) disposée solidaire en rotation, on obtient un nombre naturel pair en tant que nombre de dents différentiel $z_{Diff}$,

- sachant que tous les planétaires comportent le même nombre de dents,

- sachant qu'au moins une roue solaire (30, 150) comporte un déport de profil positif ou négatif,

- sachant qu'alternativement à la caractéristique précitée au moins une roue solaire (30, 150) comporte un déport de profil positif ou négatif et le planétaire individuel (110, 111) possède une denture séparée (113, 123) pour l'engrènement avec la roue solaire (30, 150) individuelle et les deux dentures (113, 123), pour un même nombre de dents, possèdent au moins une denture, qui comporte un déport de profil positif ou négatif, **caractérisé en ce que**

- le nombre total $P_{ges}$ des planétaires (110, 111) est plus grand que le nombre de dents différentiel $z_{Diff}$,

- pour un nombre partiel $p_v$ du nombre total $P_{ges}$ des planétaires (110, 111) avec $p_v = P_{ges} - Z_{Diff}$, les dentures séparées respectives par planétaire (111) sont pivotées d'un angle de déport $\delta$ en direction périphérique, derrière chaque planétaire (110) sans pivotement de denture, respectivement l'une derrière l'autre, par rapport à la précédente,

- l'angle de déport $\delta$ est obtenu à partir de la formule

- $\delta = \tau * (Z_{Diff}/ P_{ges}) * (Z_{S1}/Z_{p1})$ avec $\tau$ en tant qu'angle de pas de la première roue solaire (30), $Z_{S1}$ en tant que nombre de dents de la roue solaire (30) disposée solidaire en rotation et $Z_{p1}$ en tant que nombre de dents des planétaires (110, 111).

2. Système d'entraînement de forme annulaire selon la revendication 1, **caractérisé en ce qu'**un arbre de sortie logé dans un boîtier (10), portant la deuxième roue solaire à denture extérieure (150) est un arbre creux (140), dont le diamètre intérieur de l'alésage central (145) est supérieur à 75 % de la longueur d'arbre creux, sachant que l'arbre de sortie est logé sur paliers à roulement.

**3.** Système d'entraînement de forme annulaire selon la revendication 2, **caractérisé en ce que** le moteur d'entraînement (40) est un moteur couple, dont le rotor (45) est un arbre creux.

**4.** Système d'entraînement de forme angulaire selon la revendication 2, **caractérisé en ce que** la moulure périphérique (50) est disposée logée sur paliers à roulements sur l'arbre creux (140).

**5.** Système d'entraînement de forme annulaire selon la revendication 1, **caractérisé en ce que** la transformation du train épicycloïdal est calculée à partir d'un quotient, dont le dividende est le nombre de dents de la deuxième roue solaire entraînante (150), alors que le diviseur de celui-ci est la différence entre le nombre de dents de la première roue solaire fixe (30) et la deuxième roue solaire entraînante (150).

**6.** Système d'entraînement de forme annulaire selon la revendication 1, **caractérisé en ce que** le planétaire individuel (110, 111) est composé de deux parties planétaires (112, 122) disposées de façon coaxiale, qui sont reliées entre elles de façon rigide.

**7.** Système d'entraînement de forme annulaire selon la revendication 1, **caractérisé en ce qu'**il comporte des paliers à roulement (21, 55, 56, 77) et ceux-ci possèdent un jeu de coussinet du groupe de jeux de coussinets C2 conforme à la norme DIN 620/T4.

**Fig. 1**

**Fig. 2**

**Fig. 3**

EP 3 152 461 B1

Fig. 4

12

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3941719 A1
- DE 4026886 A1
- US 6705970 B2
- US 1777490 A
- EP 612934 A2

**In der Beschreibung aufgeführte Nicht-Patentliteratur**

- **VON MEIER ; BRUNO.** Anordnung mehrerer Umlauf-fräder bei Planetengetrieben. *Konstruktion,* 1961, vol. 12, 67-69